# EUROPEAN PATENT SPECIFICATION

(11) **EP 3 794 296 B1**
(45) Date of publication and mention of the grant of the patent: **30.08.2023**
(21) Application number: 19804038.8
(22) Date of filing: 16.05.2019
(51) Int. Cl.: F28C 1/16, F28C 1/14, F28C 1/08, D21F 5/20, B01D 53/78, B01D 53/26, B01D 5/00, E04H 5/12, C02F 1/10, C02F 1/12, D21F 5/00, F26B 21/08, F26B 25/00, F26B 23/00, B01D 1/00

(54) **AN ARRANGEMENT AND A METHOD FOR CONDITIONING MOIST EXHAUST AIR**
VORRICHTUNG UND VERFAHREN ZUR KONDITIONIERUNG FEUCHTER ABLUFT
AGENCEMENT ET PROCÉDÉ PERMETTANT DE CONDITIONNER DE L'AIR D'ÉCHAPPEMENT HUMIDE

(30) Priority: 17.05.2018 CN 201810475354
(43) Date of publication of application: 24.03.2021
(73) Proprietor: TM System Finland Oy, 20250 Turku (FI)
(72) Inventor: HALLAPURO, Markus, 20250 Tutku (FI)
(74) Representative: Primrose Oy
(86) International application number: PCT/FI2019/050384
(87) International publication number: WO 2019/220016

(56) References cited:
- WO-A1-2007/121670
- WO-A1-2018/033665
- DE-A1- 2 123 220
- SU-A1- 1 585 418
- US-A- 3 792 572
- US-A1- 2014 000 298

## Description

### FIELD OF THE INVENTION

The invention relates to an arrangement for conditioning moist exhaust air and more particularly to an arrangement according to preamble of claim 1. The invention relates also to a method for conditioning moist exhaust air and more particularly to a method according to preamble of claim 8.

### BACKGROUND OF THE INVENTION

In a typical industrial drying process moisture is removed from a product into an air flow creating a moist exhaust air flow. The temperature and the moisture content of the exhaust air flow varies depending on the drying process. Further, the moist exhaust air often contains also unwanted substances such as dust, dirt, odorous vapours and water soluble chemicals.

After a heat recovery process the moist exhaust air flow is usually exhausted to the atmosphere possibly causing emissions. In some areas, even exhausted plumes of a clean water vapour are unacceptable. The visible water vapour plumes can be of concern to the population living close to industrial plants. Further, plume induced fogging and icing rise accident risks and may be dangerous for crops and equipment. Formed fog may react with dust and irritative chemicals, e.g. sulphide compounds, in the surrounding air causing unsafe effects to the health of people in the surroundings.

An arrangement for conditioning moist exhaust air is described in WO2018033665 A1.

### BRIEF DESCRIPTION OF THE INVENTION

An object of the present invention is to provide a method and an arrangement so as to solve or at least alleviate the above problems. The objects of the invention are achieved with an arrangement which is characterized by what is stated in claim 1. The objects of the present invention are also achieved with a method which is characterized by what is stated in claim 8. The preferred embodiments of the invention are disclosed in other aspects of the invention.

The invention is based on the idea of an arrangement for conditioning moist exhaust air. The arrangement comprises a heat exchanger unit, a washing unit and an air mixing chamber. The heat exchanger unit configured to transfer heat between the moist exhaust air and a supplementary air comprises an inlet and an outlet for the moist exhaust air and an inlet and outlet for the supplementary air. The outlet for the moist exhaust air is connected to the washing unit configured to clean the moist exhaust air. The washing unit comprises an outlet for the washed moist exhaust air connected to an inlet of the air mixing chamber. The air mixing chamber comprises at least two compartments connected to the inlet of the air mixing chamber, and the compartments comprise inlets connected to the outlet of the supplementary air, and the compartments comprise outlets for the mixture of the washed moist exhaust air and the supplementary air. The arrangement is configured such that the mixing ratio of the washed moist exhaust air and the supplementary air differs in adjacent compartments. The arrangement comprises a control system comprising humidity measuring devices and temperature measuring devices, and the control system is configured to control a fan configured to pressurize the supplementary air based on measurement results obtained from the humidity measuring devices and the temperature measuring devices located at the outlets of the compartments.

The invention is based on the idea of a method for conditioning moist exhaust air. The method comprises a heat exchanger unit, a washing unit and an air mixing chamber. A moist exhaust air flow is guided into the heat exchanger unit via an exhaust air inlet and exits via an exhaust air outlet, a supplementary air flow is guided into the heat exchanger unit via a supplementary air inlet and exits via a supplementary air outlet. Heat is transferred between the moist exhaust air flow and the supplementary air flow in the heat exchanger unit. The moist exhaust air flow flows from the outlet into the washing unit cleaning the moist exhaust air. The washed moist exhaust air flow flows from the outlet of the washing unit to an inlet of the air mixing chamber comprising at least two compartments. The washed moist exhaust air flow is divided between the compartments, from the heat exchanger unit exited supplementary air flow is guided to the air mixing chamber and divided between the compartments. In the compartments the washed moist exhaust air flow and the supplementary air flow are mixed, and the mixed washed moist exhaust air flow and the supplementary air flow exit the compartment via a compartment outlet. The mixing ratio of the washed moist exhaust air and the supplementary air differs in adjacent compartments. In the method, a control system comprising humidity measuring devices and temperature measuring devices controls a fan pressurizing the supplementary air based on measurement results obtained from the humidity measuring devices and the temperature measuring devices located at the outlets of the compartments.

An advantage of the method and arrangement of the invention is that provides an efficient and a cost-effective dehumidification and cleaning of moist exhaust air.

### BRIEF DESCRIPTION OF THE DRAWINGS

In the following the invention will be described in greater detail by means of preferred embodiments with reference to the attached drawings, in which
Figure 1 shows an arrangement for conditioning moist exhaust air;
Figure 2 shows an arrangement for conditioning moist exhaust air;
Figure 3 shows an air mixing chamber.

### DETAILED DESCRIPTION OF THE INVENTION

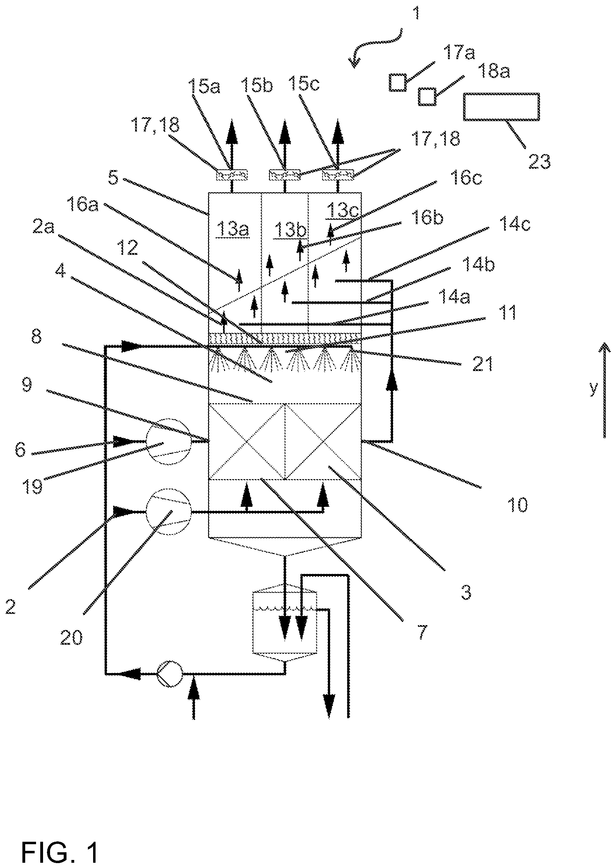

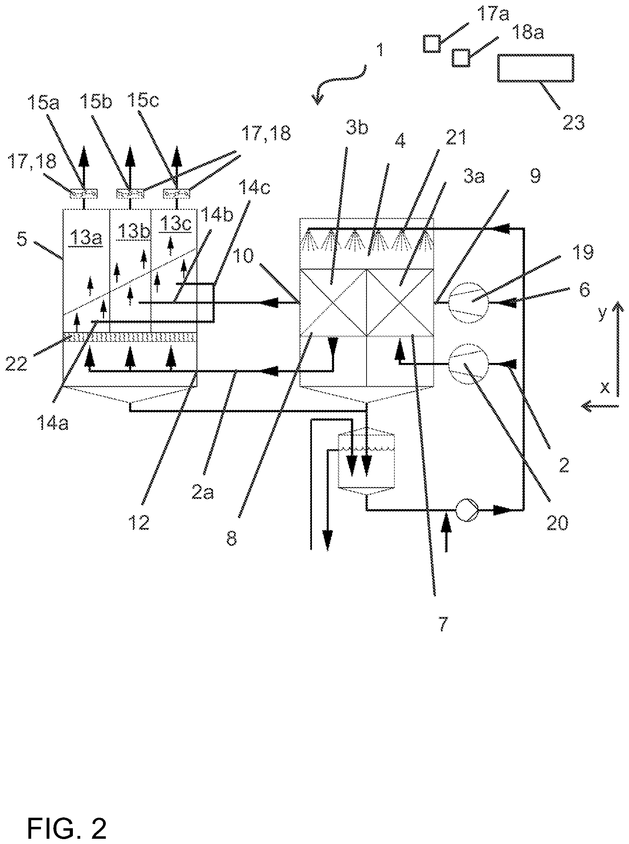

Figures 1 and 2 show an arrangement 1 for conditioning moist exhaust air 2. The arrangement conditions moist exhaust air 2 and it comprises a heat exchanger unit 3, a washing unit 4 and an air mixing chamber 5. The heat exchanger unit 3 configured to transfer heat between the moist exhaust air 2 and a supplementary air 6. The heat exchanger unit 3 comprises an inlet 7 and an outlet 8 for the moist exhaust air and an inlet 9 and outlet 10 for the supplementary air. The outlet for the moist exhaust air 8 is connected to the washing unit 4. The washing unit 4 is configured to clean the moist exhaust air 2. The washing unit 4 comprises an outlet 11 for the washed moist exhaust air connected to an inlet of the air mixing chamber 12. The air mixing chamber 5 comprises at least two compartments 13a-e connected to the inlet of the air mixing chamber 12. The compartments comprise inlets 14a-e for the supplementary air 6 which are connected to the outlet of the supplementary air 10. The compartments 13a-e comprise outlets 15a-e for the mixture 16a-e of the washed moist exhaust air 2a and the supplementary air. The arrangement comprises a control system comprising humidity measuring devices 17 and temperature measuring devices 18. The control system is configured to control a fan 19 configured to pressurize the supplementary air 6 based on measurement results obtained from the humidity measuring devices 17 and the temperature measuring devices 18 located at the outlets of the compartments 15a-e.

The method for conditioning moist exhaust air 2 comprises a heat exchanger unit 3, a washing unit 4 and an air mixing chamber 5. A moist exhaust air 2 flow is guided into the heat exchanger unit 3 via an exhaust air inlet 7 and exits via an exhaust air outlet 8. A supplementary air 6 flow is guided into the heat exchanger unit 3 via a supplementary air inlet 9 and exits via a supplementary air outlet 10 and heat is transferred between the moist exhaust air 2 flow and the supplementary air 6 flow in the heat exchanger unit 3. The moist exhaust air flow flows from the outlet 8 into the washing unit 4 cleaning the moist exhaust air, the washed moist exhaust air 2a flow flows from the outlet of the washing unit 11 to an inlet of the air mixing chamber 12 comprising at least two compartments 13a-e. The washed moist exhaust air 2a flow is divided between the compartments 13a-e, from the heat exchanger unit 3 exited supplementary air flow is guided to the air mixing chambers and divided between the compartments 13a-e. In the compartments 13a-e the washed moist exhaust air 2a flow and the supplementary air 6 flow are mixed, and the mixture of the washed moist exhaust air flow and the supplementary air flow 16a-e exit the compartment via a compartment outlet 15a-e. In the method, a control system comprising humidity measuring devices 17 and temperature measuring devices 18 controls a fan 19 pressurizing the supplementary air 6 based on measurement results obtained from the humidity measuring devices 17 and the temperature measuring devices 18 located at the outlets of the compartments 15a-e.

In Figure 1 the moist exhaust air 2 is guided to a bottom part of the housing containing the heat exchanger unit. The flow guiding may comprise pressurizing the moist exhaust air flow 2 with one or more fans 20.

The heat exchanger unit 3 comprises two heat exchangers, which are air-to-air heat exchangers. The type is a cross flow heat exchanger, for instance. The supplementary air 6 comprises preferably outdoor air. In the heat exchanger unit 3 the temperature of the moist exhaust air 2 decreases and the temperature of the supplementary air 6 increases.

In Figure 1 the heat exchanger unit 3, the washing unit 4 and the air mixing chamber 5 are contained in a same housing, and arranged one upon the another. The moist exhaust air 2 flow flows upwards in the heat exchanger unit 3, in the washing unit 4 and in the air mixing chamber 5 in vertical direction y.

The moist exhaust air 2 flows from the heat exchanger unit 3 into the washing unit 4. In the Figures 1-2 shown washing unit 4 is scrubbing the moist exhaust air 2 flow with a washing water. The washing unit 4 comprises a wet scrubber. The wet scrubber is utilized for cleaning and reducing the temperature and the moisture content of a moist exhaust air 2. The scrubber is advantageous in drying the moist exhaust air 2 as it offers large volume for the heat and mass transfer. The wet scrubber is cost effective as the required heat and mass transfer surface is considerably lower compared to conventional plate heat exchanger systems or a tube-in-a-shell heat exchanger systems. The scrubber cleans the moist exhaust air 2 by removing unwanted substances from the moist exhaust air 2. Examples of removable substances are dust, dirt, odorous vapours and water soluble chemicals.

In the scrubber of Figure 1 the moist exhaust air 2 flow flows upwards and droplets of a cooling water are injected into the exhaust air flow from a plurality of nozzles 21. The cooling water droplets are flowing downwards in counter flow to the exhaust air 2 flow. The moist exhaust air 2 collides with the cooling water creating a turbulent zone where the air/water interface is continuously and rapidly renewed. Scrubbing is effectively accomplished by the thorough mixing of the exhaust air 2 and scrubbing cooling water in the scrubber.

The cleaned, washed moist exhaust air 2a is discharged from the scrubber through one or more exhaust air openings at the top part of the scrubber. A droplet separator 22 is arranged between the washing unit 4 and the air mixing chamber 5 for separating droplets from the washed moist exhaust air 2a.

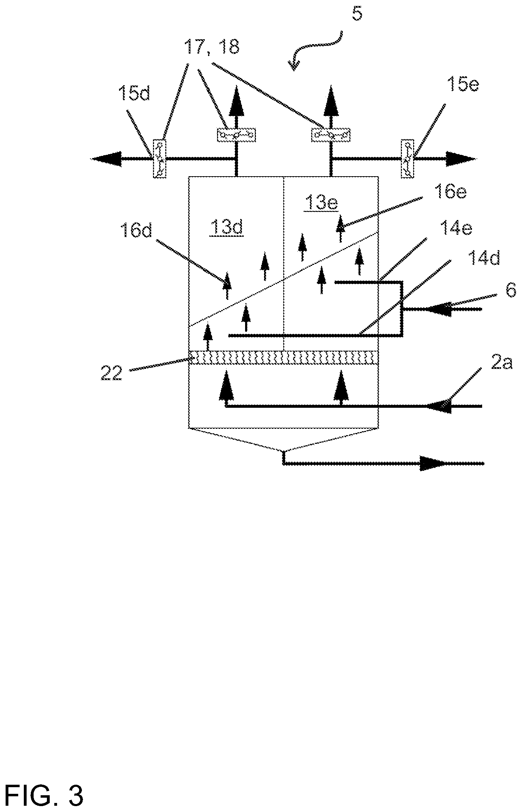

In the Figures 1 and 2 the air mixing chamber 5 comprises three separate compartments 13a-c. Depending on the application, the number of compartments may be smaller, e.g. two as shown in Figure 3, or higher, e.g. four. Each compartment 13a-e comprises an inlet for the washed moist exhaust air and an inlet for the supplementary air 14a-e. The washed moist exhaust air 2a flow flowing from the washing unit 4 into the air mixing chamber 5 is divided between the compartments 13a-e. In the heat exchanger unit 3 heated supplementary air 6 flow is guided to the air mixing chamber 5 and divided between the compartments 13a-e. In the compartments 13a-e the washed moist exhaust air 2a flow and the supplementary air 6 flow are mixed. The mixing ratio of the washed moist exhaust air 2a flow and the supplementary air 6 flow differs in adjacent compartments 13a-e. This means that the state of the mixed air flow, i.e. the state of the mixture of the washed moist exhaust air flow and the supplementary air flow 16a-e, is different at adjacent compartment outlets 15a-e.

For instance, the air mixing chamber 5 comprises three compartments13a-c, and the the mixture of the washed moist exhaust air flow and the supplementary air flow 16a-c at each compartment outlet 15a-c comprises different temperature and/or humidity.

As an example, a following volume distribution of the washed moist exhaust air 2a flow and the supplementary air 6 flow can be used. The combined volume flow of the washed moist exhaust air 2a flow and the supplementary air 6 flow into the first compartment 13a comprises 10-30%, the combined volume flow into the second compartment 13b comprises 10-30% and the combined volume flow into the third compartment 13c comprises 30-80% of the combined volume flows into all the compartments 13a-c.

As an example, a following volume distribution of the compartments 13a-c can be used. The volume of the first compartment 13a comprises 10-30%, the volume of the second compartment 13b comprises 10-30% and the volume of the third compartment 13c comprises 30-80% of the combined volumes of the compartments 13a-c.

The arrangement shown in Figures 1-2 comprises a control system comprising humidity measuring devices 17 and temperature measuring devices 18. The control system is configured to control a fan 19 configured to pressurize the supplementary air 6 based on measurement results obtained from the humidity measuring devices 17 and the temperature measuring devices 18 located at the outlets of the compartments 15a-c.

The opening of the outlet of the compartment 15a-c can be adjusted to control the volume flow out of the compartment 13a-c.

The control system may further comprise an outdoor air humidity measuring device 17a, an outdoor air temperature measuring device 18a and a computing unit 23. The computing unit 23 determines a relative humidity of a discharge air based on the measured temperatures and humidities. The discharge air comprises the mixture of the washed moist exhaust air flow and the supplementary air flow 16a-e at the outlet of one of the compartments 15a-e and surrounding outdoor air. The control system controls the fan 19 configured to pressurize the supplementary air 6 based on the determined relative humidity of a discharge air.

The fan 19 pressurizing the supplementary air 6 increases or decreases the supplementary air 6 flow such that the computed relative humidity of the discharge air remains below 98%. This prevents the formation of the plumes of a water vapour when the mixture of the washed moist exhaust air flow and the supplementary air flow 16a-e from the one of the compartments 13a-e is discharged into outdoor air.

Figure 2 shows an arrangement for conditioning moist exhaust air 2. The reference numbers used in Figure 1 are used for corresponding components in Figure 2. In the arrangement shown in Figure 2 the placement of some of the components and the flow path of the moist exhaust air 2 flow differs from the arrangement of Figure 1. The description of Figure 1 is otherwise valid and is not repeated.

In Figure 2 shown arrangement, the heat exchanger unit 3 and the washing unit 4 are contained in a same housing, and the air mixing chamber 5 is arranged side by side in horizontal direction x.

In Figure 2, the heat exchanger unit 3 is divided into two parts. The moist exhaust air 2 flow enters the first heat exchanger part 3a of the heat exchanger unit 3 and flows upwards y through the first heat exchanger part 3a into the washing unit 4. In the washing unit 4 the moist exhaust air 2 flow is cleaned and it moves horizontally x towards the second heat exchanger part 3b of the heat exchanger unit 3. In the second heat exchanger part 3b of the heat exchanger unit 3 the washed moist exhaust air 2a flows downwards.

The washed moist exhaust air 2a flows then substantially horizontally towards the bottom part of the air mixing chamber 5. The washed moist exhaust air 2a flows enters the bottom part of the air mixing chamber 5 and starts to flow upwards. A droplet separator 22 is arranged between the bottom part of the air mixing chamber 5 and the compartments 13a-c for separating droplets from the washed moist exhaust air 2a.

The arrangement of the compartments and the control system corresponds the ones shown in Figure 1.

Figure 3 shows an air mixing chamber 5. The air mixing chamber 5 is applicable to the embodiments shown in Figures 1 and 2. The washed moist exhaust air 2a flow is guided to the bottom part of the air mixing chamber 5. In Figure 3 the washed moist exhaust air 2a flows into the air mixing chamber 5 in horizontal direction, but the air mixing chamber 5 can be arranged on the top of the air washing unit 4 as shown in Figure 1. The air mixing chamber 5 comprises two compartments 13d-e. Each compartment 13d-e comprises an inlet for the washed moist exhaust air 2a and for the supplementary air14 d-e. The washed moist exhaust air 2a flow flowing from the washing unit 4 into the air mixing chamber 5 is divided between the two compartments 13d-e. In the heat exchanger unit 3 heated supplementary air 6 flow is guided to the air mixing chamber 5 via inlets 14d-e and divided between the two compartments 13d-e.

In the compartments the washed moist exhaust air 2a flow and the supplementary air 6 flow are mixed. The mixing ratio of the washed moist exhaust air 2a flow and the supplementary air 6 flow differs in adjacent compartments 13d-e. This means that the state of the mixed air flow, i.e. the state of the mixture of the washed moist exhaust air flow and the supplementary air flow 16d-e, is different at adjacent compartment outlets 15d-e.

The mixture of the washed moist exhaust air flow and the supplementary air flow16d-e from the compartments 13d-e is arranged to be distributable at the outlets 15d-e into two separate air flows such that the mixture 16d-e from both compartments 13d-e can be discharged into outdoor air. Thus, 0-100% of the mixture of the washed moist exhaust air flow and the supplementary air flow 16d-e exiting a compartment 13d-e can be discharged into outdoor air.

In an embodiment, the moist exhaust air 2 is process air from a drying process. In the drying process moisture is removed from a product into a hot air flow creating a moist exhaust air flow. The drying process is preferably continuous energy intensive drying process where the moist exhaust air flow may comprise 80-200 grams of water vapour per kg of air, for instance, where the temperature of the moist exhaust air comprises 48°C-85°C. Examples of continuous energy intensive drying processes are drying of paper, pulp, wood, lumber or waste sludge.

In an embodiment, the arrangement is connected to a dryer hood system of a paper or pulp machine, wherein the dryer hood system comprises a dryer hood arranged above paper or pulp machine in a production hall, the production hall comprises an inlet for a building supply air, the dryer hood comprising a hood supply air inlet and an hood exhaust air outlet, wherein the hood exhaust air outlet is connected to the inlet of the moist exhaust air 7 in the heat exchanger unit 3, and the hood supply air inlet is connected to one of the outlets of the compartments 15a-e of the air mixing chamber 5, and another of the outlets of the compartments 15a-e of the air mixing chamber 5 is connected to the inlet for a building supply air of the production hall. Preferably, the mixture of the washed moist exhaust air flow and the supplementary air flow 16a-e from the compartment 13a-e connected to the hood supply air inlet comprises more water vapour per kg of air than the mixture of the washed moist exhaust air flow and the supplementary air flow 16a-e from the compartment 13a-e connected to the inlet for a building supply air of the production hall.

Further, in the arrangement connected to a dryer hood system of a paper or pulp machine the air mixing chamber can comprise a third compartment 13a-e, and from the outlet of the third compartment 15a-e of the air mixing chamber 5 the mixture of the washed moist exhaust air flow and the supplementary air flow 16a-e is discharged into outdoor air.

In an embodiment, the arrangement is connected to a dryer hood system of a paper or pulp machine, wherein the dryer hood system comprises a dryer hood arranged above paper or pulp machine in a production hall. The production hall comprises an inlet for a building supply air, the dryer hood comprising a hood supply air inlet and a hood exhaust air outlet, wherein the hood exhaust air outlet is connected to the inlet of the moist exhaust air 7 in the heat exchanger unit 3. The mixing chamber 5 comprises two separate compartments 13d-e. The hood supply air inlet is connected to the outlet of the first compartment 15d, and the outlet of the second compartment 15e is connected to the inlet for a building supply air of the production hall. At least part of the mixture of the washed moist exhaust air flow and the supplementary air flow 16d-e at the outlets of the first and second compartments 15d-e is dischargeable into outdoor air. Preferably, the mixture of the washed moist exhaust air flow and the supplementary air flow 16d from the first compartment 13d comprises more water vapour per kg of air than the mixture of the washed moist exhaust air flow and the supplementary air flow 16e from the second compartment 13e.

Further, as an example, a following volume distribution of the washed moist exhaust air 2a flow and the supplementary air 6 flow can be used. The combined volume flow of the washed moist exhaust air 2a flow and the supplementary air 6 flow into the first compartment 13d comprises 30-80% and the combined volume flow into the second compartment 13e comprises 10-30% of the combined volume flows into all the compartments 13d-e.

In an embodiment, in the method a dryer hood system is drying a sheet like material in a paper or pulp machine, wherein the dryer hood system comprises a dryer hood arranged above the paper or pulp machine in a production hall, a building supply air is provided to the production hall via an inlet, a hood supply air is guided to the dryer hood via an inlet and a hood exhaust air is guided away from the dryer hood via an outlet, wherein the hood exhaust air is guided to the inlet of the moist exhaust air 7 in the heat exchanger unit 3, and from one of the outlets of the compartments 15a-e of the air mixing chamber 5 the mixture of the washed moist exhaust air flow and the supplementary air flow 16a-e is guided to the hood supply air inlet, and from another of the outlets of the compartments 15a-e of the air mixing chamber 5 the mixture of the washed moist exhaust air flow and the supplementary air flow 16a-e is guided to the inlet for a building supply air of the production hall.

Further, in the method where a dryer hood system is drying a sheet like material in a paper or pulp machine the air mixing chamber can comprise a third compartment 13a-e, and through the outlet of the third compartment 15a-e of the air mixing chamber 5 the mixture of the washed moist exhaust air flow and the supplementary air flow 16a-e is discharged into outdoor air.

In an embodiment, in the method a dryer hood system is drying a sheet like material in a paper or pulp machine, wherein the dryer hood system comprises a dryer hood arranged above the paper or pulp machine in a production hall, a building supply air is provided to the production hall via an inlet, a hood supply air is guided to the dryer hood via an inlet and a hood exhaust air is guided away from the dryer hood via an outlet, wherein the hood exhaust air is guided to the inlet of the moist exhaust air 7 in the heat exchanger unit3 . The mixing chamber 5 comprises two separate compartments 13a-e, and from the outlet of the first compartment 15a-e the mixture of the washed moist exhaust air flow and the supplementary air flow 16a-e is guided to the hood supply air inlet, and from the outlet of the second compartment 15a-e of the air mixing chamber 5 the mixture of the washed moist exhaust air flow and the supplementary air flow 16a-e is guided to the inlet for a building supply air of the production hall. At least part of the mixture of the washed moist exhaust air flow and the supplementary air flow 16a-e at the outlets of the first and second compartments 15a-e is dischargeable into outdoor air.

It will be obvious to a person skilled in the art that, as the technology advances, the inventive concept can be implemented in various ways. The invention and its embodiments are not limited to the examples described above but may vary within the scope of the claims.

Parts list: 1 an arrangement; 2 moist exhaust air, 2a washed moist exhaust air; 3 a heat exchanger unit; 3a,b a heat exchanger part; 4 a washing unit; 5 an air mixing chamber; 6 a supplementary air; 7 an inlet for the moist exhaust air; 8 an outlet for the moist exhaust air; 9 an inlet for the supplementary air; 10 an outlet for the supplementary air; 11 an outlet of a washing unit; 12 an inlet of an air mixing chamber; 13a-e a compartment; 14a-e an inlet of a compartment for supplementary air; 15a-e an outlet of a compartment; 16a-e a mixture; 17, 17a a humidity measuring device; 18, 18a a temperature measuring device; 19 a supplementary air fan; 20 a moist exhaust air fan; 21a nozzle; 22 a droplet separator; 23 a computing unit; x horizontal direction; y vertical direction.

## Claims

1. An arrangement for conditioning moist exhaust air, **characterized in that** the arrangement (1) comprises a heat exchanger unit (3), a washing unit (4) and an air mixing chamber (5), the heat exchanger unit (3) configured to transfer heat between the moist exhaust air (2) and a supplementary air (6) comprises an inlet (7) and an outlet (8) for the moist exhaust air and an inlet (9) and outlet (10) for the supplementary air, the outlet for the moist exhaust air (8) is connected to the washing unit (4) configured to clean the moist exhaust air (2), the washing unit (4) comprises an outlet (11) for the washed moist exhaust air (2a) connected to an inlet of the air mixing chamber (12), the air mixing chamber (5) comprises at least two compartments (13a-e) connected to the inlet of the air mixing chamber (12), and the compartments (13a-e) comprise inlets (14a-e) connected to the outlet of the supplementary air (10), and the compartments (13a-e) comprise outlets (15a-e) for the mixture of the washed moist exhaust air and the supplementary air (16a-e), the arrangement being configured such that the mixing ratio of the washed moist exhaust air (2a) and the supplementary air (6) differs in adjacent compartments (13a-e), and the arrangement comprises a control system comprising humidity measuring devices (17) and temperature measuring devices (18), and the control system is configured to control a fan (19) configured to pressurize the supplementary air (6) based on measurement results obtained from the humidity measuring devices (17) and the temperature measuring devices (18) located at the outlets of the compartments (15a-e).

2. An arrangement according to claim 1, **characterized in that** the control system comprises an outdoor air humidity measuring device (17a), an outdoor air temperature measuring device (18a) and a computing unit (23), and the computing unit (23) is configured to determine a relative humidity of a discharge air, where the discharge air comprises the mixture of the washed moist exhaust air and the supplementary air (16a-e) at the outlet of the compartment (15a-e) and outdoor air, and the control system is configured to control the fan (19) configured to pressurize the supplementary air (6) based on the relative humidity of the discharge air.

3. An arrangement according to any of claims 1-2, **characterized in that** the washing unit (4) is configured to scrub the moist exhaust air (2) with a washing water.

4. An arrangement according to any of claims 1-3, **characterized in that** the mixing chamber (5) comprises three separate compartments (13a-c).

5. An arrangement according to any of claims 1-4, **characterized in that**
the heat exchanger unit (3), the washing unit (4) and the air mixing chamber (5) are contained in a same housing, and arranged one upon the another; or
the heat exchanger unit (3) and the washing unit (4) are contained in a same housing, and the air mixing chamber (5) is arranged side by side in horizontal direction (x).

6. An arrangement according to any of claims 1-5, **characterized in that** the arrangement is connected to a dryer hood system of a paper or pulp machine, wherein the dryer hood system comprises a dryer hood arranged above the paper or pulp machine in a production hall, the production hall comprises an inlet for a building supply air, the dryer hood comprising a hood supply air inlet and an hood exhaust air outlet, wherein the hood exhaust air outlet is connected to the inlet of the moist exhaust air (7) in the heat exchanger unit (3), and the hood supply air inlet is connected to one of the outlets of the compartments (15a-e) of the air mixing chamber (5), and another of the outlets of the compartments (15a-e) of the air mixing chamber (5) is connected to the inlet for a building supply air of the production hall.

7. An arrangement according to any of claims 1-5, **character**- **ized** in that the arrangement is connected to a dryer hood system of a paper or pulp machine, wherein the dryer hood system comprises a dryer hood arranged above the paper or pulp machine in a production hall, the production hall comprises an inlet for a building supply air, the dryer hood comprising a hood supply air inlet and an hood exhaust air outlet, wherein the hood exhaust air outlet is connected to the inlet of the moist exhaust air (7) in the heat exchanger unit (3), and the mixing chamber (5) comprises two separate compartments (13d-e), the hood supply air inlet is connected to the outlet of the first compartment (15d), and the outlet of the second compartment (15e) is connected to the inlet for a building supply air of the production hall, and at least part of the mixture of the washed moist exhaust air flow and the supplementary air flow (16d-e) at the outlets of the first and second compartments (15d-e) is dischargeable into outdoor air.

8. A method for conditioning moist exhaust air, **characterized in that** the method comprises a heat exchanger unit (3), a washing unit (4) and an air mixing chamber (5), a moist exhaust air (2) flow is guided into the heat exchanger unit (3) via an exhaust air inlet (7) and exits via an exhaust air outlet (8), a supplementary air (6) flow is guided into the heat exchanger unit (3) via a supplementary air inlet (9) and exits via a supplementary air outlet (10), heat is transferred between the moist exhaust air (2) flow and the supplementary air (6) flow in the heat exchanger unit (3), the moist exhaust air (2) flow flows from the outlet (8) into the washing unit (4) cleaning the moist exhaust air (2), the washed moist exhaust air (2a) flow flows from the outlet of the washing unit (11) to an inlet of the air mixing chamber (12) comprising at least two compartments (13a-e), the washed moist exhaust air (2a) flow is divided between the compartments (13a-e), from the heat exchanger unit (3) exited supplementary air (6) flow is guided to the air mixing chamber (5) and divided between the compartments (13a-e), and in the compartments (13a-e) the washed moist exhaust air (2a) flow and the supplementary air (6) flow are mixed, the mixing ratio of the washed moist exhaust air (2a) flow and the supplementary air flow (6) differs in adjacent compartments (13a-e), and the mixture of the washed moist exhaust air flow and the supplementary air flow (16a-e) exit the compartment (13a-e) via a compartment outlet (15a-e), and in the method a control system comprising humidity measuring devices (17) and temperature measuring devices (18) controls a fan (19) pressurizing the supplementary air (6) based on measurement results obtained from the humidity measuring devices (17) and the temperature measuring devices (18) located at the outlets of the compartments (15a-e).

9. A method as claimed in claim 8, **characterized in that** the control system comprises an outdoor air humidity measuring device (17a), an outdoor air temperature measuring device (18a) and a computing unit (23), and the computing unit (23) determines a relative humidity of a discharge air, where the discharge air comprises the mixture of the washed moist exhaust air flow and the supplementary air flow (16a-e) at the outlet of one of the compartments (15a-e) and outdoor air, and the control system controls the fan (19) configured to pressurize the supplementary air (6) based on the relative humidity of a discharge air.

10. A method as claimed in any of claims 8 or 9, **characterized in that** the moist exhaust air (2) flow flows upwards in the heat exchanger unit (3), in the washing unit (4) and in the air mixing chamber (5) in vertical direction (y).

11. A method as claimed in any of claims 8 or 9, **characterized in that** the moist exhaust air (2) flow flows upwards in the heat exchanger unit (3), upwards and downwards in the washing unit (4) and upwards in the air mixing chamber (5) in vertical direction (y).

12. A method as claimed in any of claims 8-11, **characterized in that** in the method a dryer hood system is drying a sheet like material in a paper or pulp machine, wherein the dryer hood system comprises a dryer hood arranged above the paper or pulp machine in a production hall, a building supply air is provided to the production hall via an inlet, a hood supply air is guided to the dryer hood via an inlet and a hood exhaust air is guided away from the dryer hood via an outlet, wherein the hood exhaust air is guided to the inlet of the moist exhaust air (7) in the heat exchanger unit (3), and from one of the outlets of the compartments (15a-e) of the air mixing chamber (5) the mixture of the washed moist exhaust air flow and the supplementary air flow (16a-e) is guided to the hood supply air inlet, and from another of the outlets of the compartments (15a-e) of the air mixing chamber (5) the mixture of the washed moist exhaust air flow and the supplementary air flow (16a-e) is guided to the inlet for a building supply air of the production hall.

13. A method as claimed in any of claims 8-11, **characterized in that** in the method a dryer hood system is drying a sheet like material in a paper or pulp machine, wherein the dryer hood system comprises a dryer hood arranged above the paper or pulp machine in a production hall, a building supply air is provided to the production hall via an inlet, a hood supply air is guided to the dryer hood via an inlet and a hood exhaust air is guided away from the dryer hood via an outlet, wherein the hood exhaust air is guided to the inlet of the moist exhaust air (7) in the heat exchanger unit (3), the mixing chamber (5) comprises two separate compartments (13d-e), and from the outlet of the first compartment (15d) the mixture of the washed moist exhaust air flow and the supplementary air flow (16d) is guided to the hood supply air inlet, and from the outlet of the second compartment (15e) of the air mixing chamber (5) the mixture of the washed moist exhaust air flow and the supplementary air flow (16e) is guided to the inlet for a building supply air of the production hall and at least part of the mixture of the washed moist exhaust air flow and the supplementary air flow (16d-e) at the outlets of the first and second compartments (15d-e) is dischargeable into outdoor air.

14. A method as claimed in any one of claims 8-13, **characterized in that** the moist exhaust air (2) flow guiding comprises pressurizing the moist exhaust air flow with at least one fan (20).

## Patentansprüche

1. Anordnung zur Konditionierung feuchter Abluft, **dadurch gekennzeichnet, dass** die Anordnung (1) eine Wärmetauschereinheit (3), eine Wascheinheit (4) und eine Luftmischkammer (5) umfasst, die Wärmetauschereinheit (3), die zum Übertragen von Wärme zwischen der feuchten Abluft (2) und einer Zusatzluft (6) konfiguriert ist, einen Einlass (7) und einen Auslass (8) für die feuchte Abluft und einen Einlass (9) und einen Auslass (10) für die Zusatzluft umfasst, der Auslass für die feuchte Abluft (8) mit der Wascheinheit (4) verbunden ist, die zum Reinigen der feuchten Abluft (2) konfiguriert ist, die Wascheinheit (4) einen Auslass (11) für die gewaschene feuchte Abluft (2a) umfasst, der mit einem Einlass der Luftmischkammer (12) verbunden ist, die Luftmischkammer (5) mindestens zwei mit dem Einlass der Luftmischkammer (12) verbundene Fächer (13a-e) umfasst, und die Fächer (13a-e) mit dem Auslass der Zusatzluft (10) verbundene Einlässe (14a-e) umfassen, und die Fächer (13a-e) Auslässe (15a-e) für das Gemisch aus der gewaschenen feuchten Abluft und der Zusatzluft (16a-e) umfassen, wobei die Anordnung so konfiguriert ist, dass sich das Mischverhältnis der gewaschenen feuchten Abluft (2a) und der Zusatzluft (6) in angrenzenden Fächern (13a-e) unterscheidet, und die Anordnung ein Steuersystem umfasst, das Feuchtigkeitsmessvorrichtungen (17) und Temperaturmessvorrichtungen (18) umfasst, und das Steuersystem so konfiguriert ist, dass es einen Lüfter (19) steuert, der konfiguriert ist, die Zusatzluft (6) basierend auf Messergebnissen, die von den Feuchtigkeitsmessvorrichtungen (17) und den Temperaturmessvorrichtungen (18), die sich an den Auslässen der Fächer (15a-e) befinden, erhalten werden, unter Druck zu setzen.

2. Anordnung nach Anspruch 1, **dadurch gekennzeichnet, dass** das Steuersystem eine Außenluft-Feuchtigkeitsmessvorrichtung (17a), eine Außenluft-Temperaturmessvorrichtung (18a) und eine Recheneinheit (23) umfasst, und die Recheneinheit (23) konfiguriert ist, eine relative Feuchtigkeit einer Abluft zu bestimmen, wobei die Abluft das Gemisch aus der gewaschenen feuchten Abluft und der Zusatzluft (16a-e) am Auslass des Fachs (15a-e) und Außenluft umfasst, und das Steuersystem konfiguriert ist, den Lüfter (19) zu steuern, der konfiguriert ist, die Zusatzluft (6) basierend auf der relativen Feuchtigkeit der Abluft unter Druck zu setzen.

3. Anordnung nach einem der Ansprüche 1-2, **dadurch gekennzeichnet, dass** die Wascheinheit (4) konfiguriert ist, die feuchte Abluft (2) mit einem Waschwasser zu reinigen.

4. Anordnung nach einem der Ansprüche 1-3, **dadurch gekennzeichnet, dass** die Mischkammer (5) drei getrennte Fächer (13a-c) umfasst.

5. Anordnung nach einem der Ansprüche 1-4, **dadurch gekennzeichnet, dass**
die Wärmetauschereinheit (3), die Wascheinheit (4) und die Luftmischkammer (5) in einem gemeinsamen Gehäuse enthalten und übereinander angeordnet sind; oder
die Wärmetauschereinheit (3) und die Wascheinheit (4) in einem gemeinsamen Gehäuse enthalten sind, und die Luftmischkammer (5) in horizontaler Richtung (x) nebeneinander angeordnet ist.

6. Anordnung nach einem der Ansprüche 1-5, **dadurch gekennzeichnet, dass** die Anordnung mit einem Trocknerhaubensystem einer Papier- oder Zellstoffmaschine verbunden ist, wobei das Trocknerhaubensystem eine Trocknerhaube umfasst, die oberhalb der Papier- oder Zellstoffmaschine in einer Produktionshalle angeordnet ist, die Produktionshalle einen Einlass für eine Gebäudezuluft umfasst, wobei die Trocknerhaube einen Haubenzulufteinlass und einen Haubenabluftauslass umfasst, wobei der Haubenabluftauslass mit dem Einlass der feuchten Abluft (7) in der Wärmetauschereinheit (3) verbunden ist, und der Haubenzulufteinlass mit einem der Auslässe der Fächer (15a-e) der Luftmischkammer (5) verbunden ist, und ein anderer der Auslässe der Fächer (15a-e) der Luftmischkammer (5) mit dem Einlass für eine Gebäudezuluft der Produktionshalle verbunden ist.

7. Anordnung nach einem der Ansprüche 1-5, **dadurch gekennzeichnet, dass** die Anordnung mit einem Trocknerhaubensystem einer Papier- oder Zellstoffmaschine verbunden ist, wobei das Trocknerhaubensystem eine Trocknerhaube umfasst, die oberhalb der Papier- oder Zellstoffmaschine in einer Produktionshalle angeordnet ist, die Produktionshalle einen Einlass für eine Gebäudezuluft umfasst, die Trocknerhaube einen Haubenzulufteinlass und einen Haubenabluftauslass umfasst, wobei der Haubenabluftauslass mit dem Einlass der feuchten Abluft (7) in der Wärmetauschereinheit (3) verbunden ist, und die Mischkammer (5) zwei separate Fächer (13d-e) umfasst, der Haubenzulufteinlass mit dem Auslass des ersten Fachs (15d) verbunden ist, und der Auslass des zweiten Fachs (15e) mit dem Einlass für eine Gebäudezuluft der Produktionshalle verbunden ist, und zumindest ein Teil des Gemisches aus dem gewaschenen feuchten Abluftstrom und dem Zusatzluftstrom (16d-e) an den Auslässen des ersten und zweiten Fachs (15d-e) in die Außenluft abführbar ist.

8. Verfahren zur Konditionierung feuchter Abluft, **dadurch gekennzeichnet, dass** das Verfahren eine Wärmetauschereinheit (3), eine Wascheinheit (4) und eine Luftmischkammer (5) umfasst, ein feuchter Abluftstrom (2) über einen Ablufteinlass (7) in die Wärmetauschereinheit (3) geleitet wird und über einen Abluftauslass (8) austritt, ein Zusatzluftstrom (6) über einen Zusatzlufteinlass (9) in die Wärmetauschereinheit (3) geleitet wird und über einen Zusatzluftauslass (10) austritt, Wärme zwischen dem feuchten Abluftstrom (2) und dem Zusatzluftstrom (6) in der Wärmetauschereinheit (3) übertragen wird, der feuchte Abluftstrom (2) vom Auslass (8) in die Wascheinheit (4) strömt, die die feuchte Abluft (2) reinigt, der gewaschene feuchte Abluftstrom (2a) vom Auslass der Wascheinheit (11) zu einem Einlass der Luftmischkammer (12) strömt, die mindestens zwei Fächer (13a-e) umfasst, der gewaschene feuchte Abluftstrom (2a) auf die Fächer (13a-e) verteilt wird, der aus der Wärmetauschereinheit (3) austretende Zusatzluftstrom (6) zur Luftmischkammer (5) geleitet und auf die Fächern (13a-e) verteilt wird, und in den Fächern (13a-e) der gewaschene feuchte Abluftstrom (2a) und der Zusatzluftstrom (6) gemischt werden, das Mischverhältnis des gewaschenen feuchten Abluftstroms (2a) und des Zusatzluftstroms (6) sich in angrenzenden Fächern (13a-e) unterscheidet und das Gemisch aus dem gewaschenen feuchten Abluftstrom und dem Zusatzluftstrom (16a-e) über einen Fachauslass (15a-e) aus dem Fach (13a-e) austritt, und in dem Verfahren ein Steuersystem, das Feuchtigkeitsmessvorrichtungen (17) und Temperaturmessvorrichtungen (18) umfasst, einen Lüfter (19) steuert, der die Zusatzluft (6) basierend auf Messergebnissen, die von den Feuchtigkeitsmessvorrichtungen (17) und den Temperaturmessvorrichtungen (18), die sich an den Auslässen der Fächer (15a-e) befinden, erhalten werden, unter Druck setzt.

9. Verfahren nach Anspruch 8, **dadurch gekennzeichnet, dass** das Steuersystem eine Außenluft-Feuchtigkeitsmessvorrichtung (17a), eine Außenluft-Temperaturmessvorrichtung (18a) und eine Recheneinheit (23) umfasst, und die Recheneinheit (23) eine relative Feuchtigkeit einer Abluft bestimmt, wobei die Abluft das Gemisch aus dem gewaschenen feuchten Abluftstrom und dem Zusatzluftstrom (16a-e) am Auslass eines der Fächer (15a-e) und Außenluft umfasst, und das Steuersystem den Lüfter (19) steuert, der konfiguriert ist, die Zusatzluft (6) basierend auf der relativen Feuchtigkeit einer Abluft unter Druck zu setzen.

10. Verfahren nach einem der Ansprüche 8 oder 9, **dadurch gekennzeichnet, dass** der feuchte Abluftstrom (2) in vertikaler Richtung (y) in der Wärmetauschereinheit (3), in der Wascheinheit (4) und in der Luftmischkammer (5) nach oben strömt.

11. Verfahren nach einem der Ansprüche 8 oder 9, **dadurch gekennzeichnet, dass** der feuchte Abluftstrom (2) in vertikaler Richtung (y) in der Wärmetauschereinheit (3) nach oben, in der Wascheinheit (4) nach oben und unten und in der Luftmischkammer (5) nach oben strömt.

12. Verfahren nach einem der Ansprüche 8-11, **dadurch gekennzeichnet, dass** in dem Verfahren ein Trocknerhaubensystem ein blattartiges Material in einer Papier- oder Zellstoffmaschine trocknet, wobei das Trocknerhaubensystem eine oberhalb der Papier-oder Zellstoffmaschine in einer Produktionshalle angeordnete Trocknerhaube umfasst, eine Gebäudezuluft der Produktionshalle über einen Einlass bereitgestellt wird, eine Haubenzuluft zu der Trocknerhaube über einen Einlass geleitet wird und eine Haubenabluft aus der Trocknerhaube über einen Auslass weggeleitet wird, wobei die Haubenabluft zum Einlass der feuchten Abluft (7) in der Wärmetauschereinheit (3) geleitet wird und aus einem der Auslässe der Fächer (15a-e) der Luftmischkammer (5) das Gemisch aus dem gewaschenen feuchten Abluftstrom und dem Zusatzluftstrom (16a-e) zum Haubenzulufteinlass geleitet wird, und aus einem anderen der Auslässe der Fächer (15a-e) der Luftmischkammer (5) das Gemisch aus dem gewaschenen feuchten Abluftstrom und dem Zusatzluftstrom (16a-e) zum Einlass für eine Gebäudezuluft der Produktionshalle geleitet wird.

13. Verfahren nach einem der Ansprüche 8-11, **dadurch gekennzeichnet, dass** in dem Verfahren ein Trocknerhaubensystem ein blattartiges Material in einer Papier- oder Zellstoffmaschine trocknet, wobei das Trocknerhaubensystem eine oberhalb der Papier-oder Zellstoffmaschine in einer Produktionshalle angeordnete Trocknerhaube umfasst, eine Gebäudezuluft der Produktionshalle über einen Einlass bereitgestellt wird, eine Haubenzuluft über einen Einlass zur Trocknerhaube geleitet wird und eine Haubenabluft über einen Auslass von der Trocknerhaube weggeleitet wird, wobei die Haubenabluft zum Einlass der feuchten Abluft (7) in der Wärmetauschereinheit (3) geleitet wird, die Mischkammer (5) zwei getrennte Fächer (13d-e) umfasst, und vom Auslass des ersten Fachs (15d) das Gemisch aus dem gewaschenen feuchten Abluftstrom und dem Zusatzluftstrom (16d) zum Haubenzulufteinlass geleitet wird, und vom Auslass des zweiten Fachs (15e) der Luftmischkammer (5) das Gemisch aus dem gewaschenen feuchten Abluftstrom und dem Zusatzluftstrom (16e) zum Einlass für eine Gebäudezuluft der Produktionshalle geleitet wird und zumindest ein Teil des Gemisches aus dem gewaschenen feuchten Abluftstrom und dem Zusatzluftstrom (16d-e) an den Auslässen des ersten und zweiten Fachs (15d-e) in die Außenluft abführbar ist.

14. Verfahren nach einem der Ansprüche 8-13, **dadurch gekennzeichnet, dass** das Leiten des feuchten Abluftstroms (2) das Unterdrucksetzen des feuchten Abluftstroms mit mindestens einem Lüfter (20) umfasst.

## Revendications

1. Agencement de conditionnement d'air d'échappement humide, **caractérisé en ce que** l'agencement (1) comprend une unité d'échangeur de chaleur (3), une unité de lavage (4) et une chambre de mélange d'air (5), l'unité d'échangeur de chaleur (3) configurée pour transférer de la chaleur entre l'air d'échappement humide (2) et un air supplémentaire (6) comprend une entrée (7) et une sortie (8) pour l'air d'échappement humide et une entrée (9) et une sortie (10) pour l'air supplémentaire, la sortie pour l'air d'échappement humide (8) est reliée à l'unité de lavage (4) configurée pour laver l'air d'échappement humide (2), l'unité de lavage (4) comprend une sortie (11) pour l'air d'échappement humide lavé (2a) reliée à une entrée de la chambre de mélange d'air (12), la chambre de mélange d'air (5) comprend au moins deux compartiments (13a-e) reliés à l'entrée de la chambre de mélange d'air (12), et les compartiments (13a-e) comprennent des entrées (14a-e) reliées à la sortie de l'air supplémentaire (10), et les compartiments (13a-e) comprennent des sorties (15a-e) pour le mélange de l'air d'échappement humide lavé et de l'air supplémentaire (16a-e), l'agencement étant configuré de telle façon que le rapport de mélange de l'air d'échappement humide lavé (2a) et de l'air supplémentaire (6) diffère dans des compartiments adjacents (13a-e), et l'agencement comprend un système de commande comprenant des dispositifs de mesure d'humidité (17) et des dispositifs de mesure de température (18), et le système de commande est configuré pour commander un ventilateur (19) configuré pour pressuriser l'air supplémentaire (6) sur la base de résultats de mesures obtenus à partir des dispositifs de mesure d'humidité (17) et des dispositifs de mesure de température (18) situés au niveau des sorties des compartiments (15a-e).

2. Agencement selon la revendication 1, **caractérisé en ce que** le système de commande comprend un dispositif de mesure d'humidité de l'air extérieur (17a), un dispositif de mesure de température de l'air extérieur (18a) et une unité de calcul (23), et l'unité de calcul (23) est configurée pour déterminer une humidité relative d'un air de refoulement, dans lequel l'air de refoulement comprend le mélange de l'air d'échappement humide lavé et de l'air supplémentaire (16a-e) au niveau de la sortie du compartiment (15a-e) et de l'air extérieur, et le système de commande est configuré pour commander le ventilateur (19) configuré pour pressuriser l'air supplémentaire (6) sur la base de l'humidité relative de l'air de refoulement.

3. Agencement selon l'une quelconque des revendications 1-2, **caractérisé en ce que** l'unité de lavage (4) est configurée pour épurer l'air d'échappement humide (2) avec une eau de lavage.

4. Agencement selon l'une quelconque des revendications 1-3, **caractérisé en ce que** la chambre de mélange (5) comprend trois compartiments séparés (13a-c).

5. Agencement selon l'une quelconque des revendications 1-4, **caractérisé en ce que**
l'unité d'échangeur de chaleur (3), l'unité de lavage (4) et la chambre de mélange d'air (5) sont contenues dans une même enceinte et agencées l'une au-dessus de l'air ; ou
l'unité d'échangeur de chaleur (3) et l'unité de lavage (4) sont contenues dans une même enceinte, et la chambre de mélange d'air (5) est agencée côte à côte dans le sens horizontal (x).

6. Agencement selon l'une quelconque des revendications 1-5, **caractérisé en ce que** l'agencement est relié à un système de hotte sécheuse d'une machine à papier ou à pâte à papier, dans lequel le système de hotte sécheuse comprend une hotte sécheuse agencée au-dessus de la machine à papier ou à pâte à papier dans un atelier de production, l'atelier de production comprend une entrée pour un air d'alimentation de bâtiment, la hotte sécheuse comprenant une entrée d'air d'alimentation de hotte et une sortie d'air d'échappement de hotte, dans lequel la sortie d'air d'échappement de hotte est reliée à l'entrée de l'air d'échappement humide (7) dans l'unité d'échangeur de chaleur (3), et l'entrée d'air d'alimentation de hotte est reliée à une des sorties des compartiments (15a-e) de la chambre de mélange d'air (5), et une autre des sorties des compartiments (15a-e) de la chambre de mélange d'air (5) est reliée à l'entrée pour un air d'alimentation de bâtiment de l'atelier de production.

7. Agencement selon l'une quelconque des revendications 1-5, **caractérisé en ce que** l'agencement est relié à un système de hotte sécheuse d'une machine à papier ou à pâte à papier, dans lequel le système de hotte sécheuse comprend une hotte sécheuse agencée au-dessus de la machine à papier ou à pâte à papier dans un atelier de production, l'atelier de production comprend une entrée pour un air d'alimentation de bâtiment, la hotte sécheuse comprenant une entrée d'air d'alimentation de hotte et une sortie d'air d'échappement de hotte, dans lequel la sortie d'air d'échappement de hotte est reliée à l'entrée de l'air d'échappement humide (7) dans l'unité d'échangeur de chaleur (3), et la chambre de mélange (5) comprend deux compartiments séparés (13de), l'entrée d'air d'alimentation de hotte est reliée à la sortie du premier compartiment (15d) et la sortie du deuxième compartiment (15e) est reliée à l'entrée pour un air d'alimentation de bâtiment de l'atelier de production, et au moins une partie du mélange du flux d'air d'échappement humide lavé et du flux d'air supplémentaire (16de) au niveau des sorties des premier et deuxième compartiments (15d-e) peut être refoulée vers l'air extérieur.

8. Procédé de conditionnement d'air d'échappement humide, **caractérisé en ce que** le procédé comprend une unité d'échangeur de chaleur (3), une unité de lavage (4) et une chambre de mélange d'air (5), un flux d'air d'échappement humide (2) est guidé dans l'unité d'échangeur de chaleur (3) via une entrée d'air d'échappement (7) et en sort via une sortie d'air d'échappement (8), un flux d'air supplémentaire (6) est guidé dans l'unité d'échangeur de chaleur (3) via une entrée d'air supplémentaire (9) et en sort via une sortie d'air supplémentaire (10), de la chaleur est transférée entre le flux d'air d'échappement humide (2) et le flux d'air supplémentaire (6) dans l'unité d'échangeur de chaleur (3), le flux d'air d'échappement humide (2) circule depuis la sortie (8) jusqu'à l'unité de lavage (4) nettoyant l'air d'échappement humide (2), le flux d'air d'échappement humide lavé (2a) circule depuis la sortie de l'unité de lavage (11) jusqu'à une entrée de la chambre de mélange d'air (12) comprenant au moins deux compartiments (13a-e), le flux d'air d'échappement humide lavé (2a) est réparti entre les compartiments (13a-e), le flux d'air supplémentaire (6) sorti de l'unité d'échangeur de chaleur (3) est guidé vers la chambre de mélange d'air (5) et réparti entre les compartiments (13a-e), et dans les compartiments (13a-e), le flux d'air d'échappement humide lavé (2a) et le flux d'air supplémentaire (6) sont mélangés, le rapport de mélange du flux d'air d'échappement humide lavé (2a) et du flux d'air supplémentaire (6) diffère dans des compartiments adjacents (13a-e), et le mélange du flux d'air d'échappement humide lavé et du flux d'air supplémentaire (16a-e) sort du compartiment (13a-e) via une sortie de compartiment (15a-e), et dans le procédé, un système de commande comprenant des dispositifs de mesure d'humidité (17) et des dispositifs de mesure de température (18) commande un ventilateur (19) qui pressurise l'air supplémentaire (6) sur la base de résultats de mesures obtenus à partir des dispositifs de mesure d'humidité (17) et des dispositifs de mesure de température (18) situés au niveau des sorties des compartiments (15a-e).

9. Procédé selon la revendication 8, **caractérisé en ce que** le système de commande comprend un dispositif de mesure d'humidité de l'air extérieur (17a), un dispositif de mesure de température de l'air extérieur (18a) et une unité de calcul (23), et l'unité de calcul (23) détermine une humidité relative d'un air de refoulement, dans lequel l'air de refoulement comprend le mélange du flux d'air d'échappement humide lavé et du flux d'air supplémentaire (16a-e) au niveau de la sortie de l'un des compartiments (15a-e) et de l'air extérieur, et le système de commande commande le ventilateur (19) configuré pour pressuriser l'air supplémentaire (6) sur la base de l'humidité relative d'un air de refoulement.

10. Procédé selon l'une quelconque des revendications 8 ou 9, **caractérisé en ce que** le flux d'air d'échappement humide (2) circule vers le haut dans l'unité d'échangeur de chaleur (3), dans l'unité de lavage (4) et dans la chambre de mélange d'air (5) dans le sens vertical (y).

11. Procédé selon l'une quelconque des revendications 8 ou 9, **caractérisé en ce que** le flux d'air d'échappement humide (2) circule vers le haut dans l'unité d'échangeur de chaleur (3), vers le haut et vers le bas dans l'unité de lavage (4) et vers le haut dans la chambre de mélange d'air (5) dans le sens vertical (y).

12. Procédé selon l'une quelconque des revendications 8-11, **caractérisé en ce que** dans le procédé, un système de hotte sécheuse sèche une matière en feuille dans une machine à papier ou à pâte à papier, dans lequel le système de hotte sécheuse comprend une hotte sécheuse agencée au-dessus de la machine à papier ou à pâte à papier dans un atelier de production, un air d'alimentation de bâtiment est délivré à l'atelier de production via une entrée, un air d'alimentation de hotte est guidé vers la hotte sécheuse via une entrée et un air d'échappement de hotte est guidé à l'opposé de la hotte sécheuse via une sortie, dans lequel l'air d'échappement de hotte est guidé vers l'entrée de l'air d'échappement humide (7) dans l'unité d'échangeur de chaleur (3), et à partir d'une des sorties des compartiments (15a-e) de la chambre de mélange d'air (5), le mélange du flux d'air d'échappement humide lavé et du flux d'air supplémentaire (16a-e) est guidé vers l'entrée d'air d'alimentation de hotte, et à partir d'une autre des sorties des compartiments (15a-e) de la chambre de mélange d'air (5), le mélange du flux d'air d'échappement humide lavé et du flux d'air supplémentaire (16a-e) est guidé vers l'entrée d'un air d'alimentation de bâtiment de l'atelier de production.

13. Procédé selon l'une quelconque des revendications 8-11, **caractérisé en ce que** dans le procédé, un système de hotte sécheuse sèche une matière en feuille dans une machine à papier ou à pâte à papier, dans lequel le système de hotte sécheuse comprend une hotte sécheuse agencée au-dessus de la machine à papier ou à pâte à papier dans un atelier de production, un air d'alimentation de bâtiment est délivré dans l'atelier de production via une entrée, un air d'alimentation de hotte est guidé vers la hotte sécheuse via une entrée et un air d'échappement de hotte est guidé à l'opposé de la hotte sécheuse via une sortie, dans lequel l'air d'échappement de hotte est guidé vers l'entrée de l'air d'échappement humide (7) dans l'unité d'échangeur de chaleur (3), la chambre de mélange d'air (5) comprend deux compartiments séparés (13d-e , et à partir de la sortie du premier compartiment (15d), le mélange du flux d'air d'échappement humide lavé et du flux d'air supplémentaire (16d) est guidé vers l'entrée d'air d'alimentation de hotte, et à partir de la sortie du deuxième compartiment (15e) de la chambre de mélange d'air (5), le mélange du flux d'air d'échappement humide lavé et du flux d'air supplémentaire (16e) est guidé vers l'entrée pour un air d'alimentation de bâtiment de l'atelier de production et au moins une partie du mélange du flux d'air d'échappement humide lavé et du flux d'air supplémentaire (16d-e) au niveau des sorties des premier et deuxième compartiments (15d-e) peut être refoulée vers l'air extérieur.

14. Procédé selon l'une quelconque des revendications 8-13, **caractérisé en ce que** le guidage du flux d'air d'échappement humide (2) comprend une pressurisation du flux d'air d'échappement humide avec au moins un ventilateur (20).
